# FASCICULE DE BREVET EUROPEEN

(11) **EP 1 216 543 B1**
(45) Date de publication et mention de la délivrance du brevet: **20.01.2010**
(21) Numéro de dépôt: 00966225.5
(22) Date de dépôt: 28.09.2000
(51) Int. Cl.: H04L 12/28

(54) **PROCEDE D'ASSOCIATION D'UN APPAREIL DANS UN RESEAU DE COMMUNICATION**
VERFAHREN ZUM ZUORDNEN EINER VORRICHTUNG IN EINEM KOMMUNIKATIONSNETZ
METHOD FOR ASSOCIATING AN APPARATUS IN A COMMUNICATION NETWORK

(30) Priorité: 28.09.1999 FR 9912051
(43) Date de publication de la demande: 26.06.2002
(73) Titulaire: Thomson Licensing, 92100 Boulogne-Billancourt (FR)
(72) Inventeur: Lopez, Patrick, F-92648 Boulogne Cedex (FR)
(74) Mandataire: Kohrs, Martin
(86) Numéro de dépôt international: PCT/FR2000/002694
(87) Numéro de publication internationale: WO 2001/024452

(56) Documents cités:
- EP-A- 0 859 490
- EP-A- 0 932 318
- US-A- 5 619 530

## Description

L'invention concerne un procédé d'association d'un appareil dans un réseau de communication, notamment un réseau local, susceptible de partager la même ressource en fréquence de transmission qu'un autre réseau voisin. L'invention s'applique notamment dans le cadre de réseaux d'accès à transmission radio à large bande ('Broadband Radio Access Networks' ou BRAN en langue anglaise), lorsqu'un appareil doit être associé à un réseau existant.

Les réseaux locaux utilisant un partage de la ressource radio en mode FDMA sont amenés à utiliser un canal parmi un ensemble fini de canaux donné et accordé par les organismes de standardisation.

Afin d'éviter de se perturber mutuellement, il est souvent judicieux de mettre en oeuvre des techniques de sondage des différents canaux. II est tout à fait possible de se limiter à l'écoute d'un sous-ensemble de canaux ou d'explorer tous les canaux. A la fin de cette phase d'écoute, l'équipement désirant créer un réseau choisira un canal dont il estime qu'il est libre de toute activité radio. On parlera alors de mécanisme de sélection de fréquence dynamique (SFD).

Il peut arriver dans un environnement formé de multiples réseaux locaux que deux réseaux, pourtant proches géographiquement, aient fait le choix de la même fréquence, sans pour autant interférer l'un sur l'autre. Ceci est d'autant plus probable que le nombre de canaux dédiés à ce service est faible.

Le document de brevet EP0859490A2 divulgue un réseau sans fil pour le ré-établissement de liens sans fil entre des hôtes selon des signaux désirés ou non.

Cependant, il se peut qu'un appareil qui doit s'associer avec un réseau puisse également communiquer avec une station de base d'un autre réseau. Se pose alors le problème de la collision des trames provenant des deux réseaux au niveau de cet appareil.

L'invention a pour but de remédier à ce problème.

L'invention a pour objet un procédé d'association d'appareil dans un premier réseau de communication, les transmissions dans le premier réseau étant effectuées sur un premier canal, **caractérisé en ce que** ledit procédé comporte les étapes suivantes, mises en oeuvre par ledit appareil,
(a) détection du premier canal de transmission ;
(b) détermination de collision sur ledit canal entre des signaux en provenance du premier réseau et d'un second réseau ;
(c) en cas de collision, transmission d'une requête de changement de canal vers le premier réseau.

Selon un mode de réalisation particulier, le procédé comporte en outre l'étape d'association de l'appareil auprès d'une station de base du premier réseau, suite à la non-détection de collision.

Selon un mode de réalisation particulier, le procédé comporte en outre la répétition des étapes de la revendication (a) à (c) jusqu'au calage du premier réseau sur un canal pour lequel aucune collision n'est détectée.

Selon un mode de réalisation particulier, la requête de changement de canal comporte au moins l'un des paramètres suivants: un identifiant du premier réseau, un identifiant de l'appareil, le nombre de fois que la requête a été envoyée, une suggestion de canal de transmission pour le premier réseau.

D'autres caractéristiques et avantages de l'invention apparaîtront à travers la description d'un exemple de réalisation particulier, décrit à l'aide des dessins joints et parmi lesquels :
- la figure 1 représente schématiquement deux réseaux locaux mettant oeuvre le procédé selon le présent exemple de réalisation ;

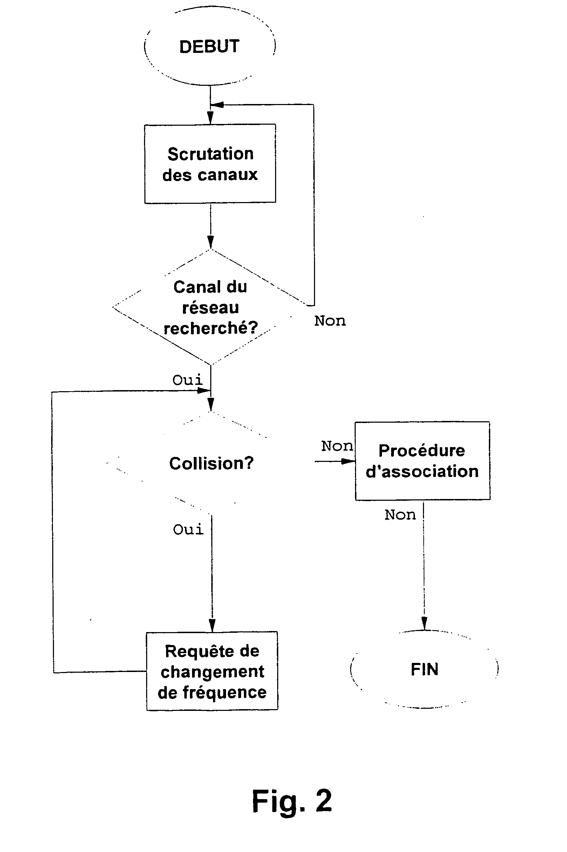

- la figure 2 est un organigramme du procédé selon le présent exemple de réalisation.

Le présent exemple se place dans le cadre des réseaux locaux de type HIPERLAN 2 ('High Performance Radio Local Network Type 2', ou encore Réseau Local Radio à Haute Performance). Ce type de réseau est en cours de spécification au niveau de l'institut européen de standards de télécommunication (ETSI). De plus amples détails sur ce réseau peuvent être trouvés notamment dans les documents suivants, publiés par l'ETSI :
(a) ETR0230002 V 0.1.2 (April 1999) Broadband Radio Access Networks (BRAN); High Performance Radio Local Area Networks (HIPERLAN) Type 2; System overview
(b) DTS/BRAN030003-1 V 0.h (August 1999) Broadband Radio Access Networks (BRAN); HIPERLAN Type 2 Functional Specification Data Link Control (DLC) layer Part 1 - Basic Data Transport Function
(c) DTS/BRAN-00240004-2 V 0.a (August 1999) Broadband Radio Access Networks (BRAN) Packet based Convergence Layer for HIPERLAN and HIPERACCESS; Part 2: Ethernet Service Specific Convergence Sublayer
(d) DTS/BRAN-0020004-2 V 0.a (July 1999) Broadband Radio Access Networks (BRAN); HIPERLAN Type 2 Functional Specification; Radio Link Control (RLC) sublayer
(e) DTS/BRAN030003-1 V 0.j (September 1999) Broadband Radio Access Networks (BRAN); HIPERLAN Type 2 Functional Specification Part 1 - Physical (PHY) layer

D'autres documents ETSI relatifs à HIPERLAN 2 sont référencés dans le document (a).

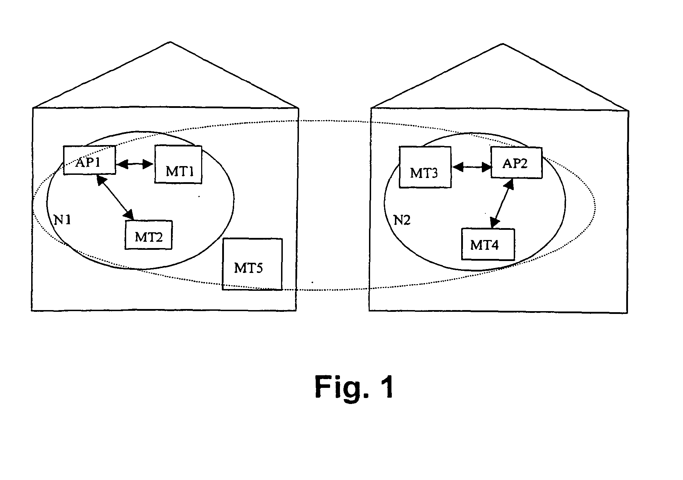

La figure 1 est un schéma de deux habitations possédant chacune un réseau local, respectivement N1 et N2. Bien entendu, l'invention ne se limite pas à ce cas particulier, et deux réseaux peuvent parfaitement être situés dans un même immeuble. Chaque réseau comporte un dispositif central ou station de base AP1, respectivement AP2. Ces stations de base sont les organes centraux respectifs de chacun des réseaux N1 et N2. En terme de fonction, elles comportent la fonctionnalité de 'Central Controllers' (Contrôleurs centraux) de l'environnement HIPERLAN 2.

Chaque réseau comporte en outre des terminaux mobiles MTx, communiquant avec le point d'accès associé au réseau. A ce titre, le réseau N1 comporte les terminaux MT1 et MT2, tandis que le réseau N2 comporte les terminaux MT3 et MT4.

Lorsqu'un terminal mobile nouveau MT5 doit être intégré à un réseau existant, ce terminal parcourt les canaux de fréquence sur lesquels les réseaux susceptibles de transmettre jusqu'à détection d'un signal de puissance et d'intelligibilité suffisante. L'intelligibilité est liée au taux d'erreur détecté par le terminal dans les données reçues.

On supposera dans ce qui suit que dans un premier temps les deux réseaux N1 et N2 utilisent le même canal de transmission. Par ailleurs, pour les besoins de l'exemple, on suppose que le terminal MT5 peut communiquer tant avec la station de base du réseau N1 qu'avec la station de base du réseau N2.

Dans le cas où le trafic sur chacun des deux réseaux N1 ou N2 n'occuperait pas toute la trame temporelle, le nouveau terminal a la possibilité de recevoir de manière intelligible les informations d'au moins un des réseaux. Selon le présent exemple, il s'agit du réseau N1. Généralement, les premières informations ainsi collectées concernent l'identité du réseau N1 et les droits d'accès. Ces informations permettent au terminal de déterminer s'il a les droits d'accès sur ce réseau N1.

Selon le présent exemple, le terminal MT5 a une connaissance préalable de l'identificateur du réseau auquel il est supposé s'associer. II reconnaît ainsi la trame correspondant à ce réseau. Cet identificateur peut être l'identificateur 'Network_Operator_ID'.

Dans le cas où le terminal a le droit d'accéder à ce réseau N1, il initie une procédure appelée association, et par laquelle le terminal s'enregistre dans le réseau N1 et obtient une identité en retour. Les protocoles généralement mis en oeuvre pour cette opération nécessitent des dialogues entre d'une part le terminal et d'autre part le réseau déjà formé. Par exemple, il est souvent requis de procéder à l'authentification du terminal avant de lui accorder une identité dans le réseau.

Dans le cas présent, les communications entre le terminal et le réseau N1 sont soumises aux perturbations émanant du réseau N2. Ainsi, rien ne garantit que la procédure d'association s'effectue correctement, car elle est fortement dépendante de l'activité sur le réseau concurrent N2. La réponse du réseau N1 à la demande d'association du terminal peut entrer en collision au niveau du terminal avec une portion de trafic du réseau N2. Ceci est détecté par le terminal MT5 par le fait que certaines trames ou parties de trames ne sont pas décodables. Le terminal MT5 déclarera qu'il est en situation d'interférence lorsqu'il ne sera pas en mesure de recevoir correctement ces messages d'association en provenance du réseau N1. Ainsi, il n'est pas nécessaire que le signal interférent, par exemple une trame d'un autre réseau, soit intelligible pour l'appareil cherchant à détecter l'interférence. Le terminal a simplement à connaître l'adresse du point d'accès du réseau auquel il souhaite s'associer.

Ainsi, au lieu d'initier une procédure classique d'association, le terminal envoie vers le réseau N1 une requête dite d'urgence, consistant en une demande au réseau N1 d'initier une sélection dynamique de fréquence, à l'exclusion de la fréquence courante. Cette requête contient également l'identité du réseau N1, afin d'éviter que les deux réseaux N1 et N2 ne changent simultanément de fréquence: les réseaux détectent l'identité et ne réagissent que si elle leur est adressée.

La requête d'urgence est transmise dans le champ RCH de la trame HIPERLAN 2 du réseau N1.

Selon le présent exemple, la requête d'urgence comporte les paramètres suivants :

**Table 1**

| **Paramètre** | **Description** |
|---|---|
| AP_ID ou CC_ID | Identifie la station de base (AP: Point d'accès, CC: Contrôleur central) Contenu du champ BCCH de la trame reçue du réseau N1 |
| NET_ID | Contenu du champ BCCH de la trame reçue du réseau N1 |
| 'Number_of_Request' | Indique le nombre de fois que le message a été envoyé. |
| 'Frequency_index' | Index de la fréquence / du canal suggéré |

Le troisième paramètre peut influencer la décision de la station de base AP1 d'accepter ou non la requête du terminal, en cas de mauvais fonctionnement du terminal mobile. Ce champ est optionnel.

Le champ BCCH est un champ de la trame définie par les documents relatifs à HIPERLAN 2.

Selon une variante de réalisation, la requête urgente comporte en outre une suggestion de canal de la part du terminal. Cette suggestion peut être déterminée de la façon suivante: le terminal surveille l'activité sur différents canaux, par exemple pendant un temps prédéterminé, et détermine ainsi quels sont les canaux susceptibles d'être non-occupés.

Cette technique garantit que le terminal est correctement compris par le réseau N1, car le terminal a émis sa requête dans la zone prévue de la trame du réseau N1. Le réseau A a reconnu son identité dans cette requête et initie une SFD. A la fin de la SFD, le réseau N1 aura changé de fréquence et alors le terminal initiera une procédure d'association normale sur cette nouvelle fréquence, a condition bien sûr qu'il n'y ait pas collision avec un troisième réseau.

La requête d'urgence du terminal sera reçue par des membres du réseau N2 soit de manière intelligible, soit en collision avec une portion du trafic de ce réseau.

Dans le cas d'une collision, celle-ci est résolue par le mécanisme de répétition ou par le codage correcteur d'erreurs utilisé par le réseau N2. Cette requête étant courte, elle ne perturbe que très localement l'activité du réseau N2.

Dans le cas d'un décodage intelligible de la requête, les membres du réseau N2 comprennent que la demande de SFD concerne le réseau N1, et ainsi aucune SFD n'est mise en oeuvre.

## Revendications

1. Procédé d'association d'appareil (MT5) dans un premier réseau de communication (N1), les transmissions dans le premier réseau étant effectuées sur un premier canal, **caractérisé en ce que** ledit procédé comporte les étapes suivantes, mises en oeuvre par ledit appareil (MT5), detection du premier canal de transmission ;
- détermination de collision sur ledit canal entre des signaux en provenance du premier réseau (N1) et d'un second réseau (N2) ;
- en cas de collision, transmission d'une requête de changement de canal vers le premier réseau.

2. Procédé selon la revendication 1, **caractérisé en ce qu'**il comporte en outre l'étape d'association de l'appareil auprès d'une station de base du premier réseau, suite à la non-détection de collision.

3. Procédé selon l'une des revendications 1 ou 2, **caractérisé en ce qu'**il comporte en outre la répétition des étapes de la revendication 1 jusqu'au calage du premier réseau sur un canal pour lequel aucune collision n'est détectée.

4. Procédé selon l'une des revendications 1 à 3, **caractérisé en ce que** la requête de changement de canal comporte un identifiant du premier réseau.

5. Procédé selon l'une des revendications 1 à 4, **caractérisé en ce que** la requête de changement de canal comporte un identifiant de l'appareil.

6. Procédé selon l'une des revendications 1 à 5, **caractérisé en ce que** la requête comporte un paramètre indiquant un canal de transmission suggéré au premier réseau.

7. Procédé selon l'une des revendications 1 à 6, **caractérisé en ce que** la requête comporte un paramètre indiquant le nombre de fois que cette requête a déjà été envoyée au premier réseau.

8. Procédé selon l'une des revendications 1 à 7, **caractérisé en ce que** l'appareil connaît avant l'association l'identité du contrôleur central du premier réseau et **en ce que** les trames émises sur ce premier réseau comportent un champ identifiant ce contrôleur central.

9. Procédé selon la revendication 8, **caractérisé en ce que** la détermination de la collision est réalisée en détectant le fait que l'appareil ne peut décoder au moins certaines trames ou parties de trames émises sur le premier réseau.

## Claims

1. A method for associating an apparatus (MT5) to a first communication network (N1), the transmissions in the first network being performed on a first channel, **characterized in that** said process comprises the steps of, implemented by said apparatus (MT5) :
- detection of the first transmission channel ;
- determination of collision on said channel between signals originating from the first network (N1) and from a second network (N2) ;
- in case of collision, transmission of a change of channel request to the first network.

2. The method as claimed in claim 1, **characterized in that** it furthermore comprises the step of associating the apparatus with a base station of the first network, following non-detection of collision.

3. The method as claimed in one of claims 1 or 2, **characterized in that** it furthermore comprises a repeating of the steps of claim 1 until the first network locks onto a channel for which no collision is detected.

4. The method as claimed in one of claims 1 to 3, **characterized in that** the change of channel request comprises an identifier of the first network.

5. The method as claimed in one of claims 1 to 4, **characterized in that** the change of channel request comprises an identifier of the apparatus.

6. The method as claimed in one of claims 1 to 5, **characterized in that** the request comprises a parameter indicating a transmission channel suggested to the first network.

7. The method as claimed in one of claims 1 to 6, **characterized in that** the request comprises a parameter indicating the number of times that this request has already been sent to the first network.

8. The method as claimed in one of claims 1 to 7, **characterized in that** the apparatus knows the identity of the central controller of the first network before association and **in that** the frames transmitted on this first network comprise a field identifying this central controller.

9. The method as claimed in claim 8, **characterized in that** the determination of collision is carried out by detecting the fact that the apparatus cannot decode at least certain frames or parts of frames transmitted on the first network.

## Patentansprüche

1. Verfahren zum Zuordnen eines Geräts (MT5) in einem ersten Kommunikationsnetzwerk (N1), wobei die Übertragungen in dem ersten Netzwerk über einen ersten Kanal erfolgen, **dadurch gekennzeichnet, dass** das Verfahren die folgenden, durch das Gerät (MT5) durchgeführten Schritte umfasst:
- Detektion des ersten Übertragungskanals;
- Bestimmung einer Kollision auf dem Kanal zwischen Signalen aus dem ersten Netzwerk (N1) und einem zweiten Netzwerk (N2);
- bei einer Kollision Übertragung einer Anfrage nach einem Kanalwechsel an das erste Netzwerk.

2. Verfahren nach Anspruch 1, **dadurch gekennzeichnet, dass** es ferner den Schritt der Zuordnung des Geräts an einer Basisstation des ersten Netzwerks infolge der Nicht-Detektion einer Kollision umfasst.

3. Verfahren nach einem der Ansprüche 1 oder 2, **dadurch gekennzeichnet, dass** es ferner die Wiederholung der Schritte gemäß Anspruch 1 bis zur Einstellung des ersten Netzwerks auf einen Kanal, bei dem keine Kollision detektiert wird, umfasst.

4. Verfahren nach einem der Ansprüche 1 bis 3, **dadurch gekennzeichnet, dass** die Anfrage nach einem Kanalwechsel eine Kennung des ersten Netzwerks umfasst.

5. Verfahren nach einem der Ansprüche 1 bis 4, **dadurch gekennzeichnet, dass** die Anfrage nach einem Kanalwechsel eine Kennung des Geräts umfasst.

6. Verfahren nach einem der Ansprüche 1 bis 5, **dadurch gekennzeichnet, dass** die Anfrage einen Parameter umfasst, der auf einen dem ersten Netzwerk vorgeschlagenen Übertragungskanal hinweist.

7. Verfahren nach einem der Ansprüche 1 bis 6, **dadurch gekennzeichnet, dass** die Anfrage einen Parameter umfasst, der anzeigt, wie oft diese Anfrage bereits an das erste Netzwerk gesendet wurde.

8. Verfahren nach einem der Ansprüche 1 bis 7, **dadurch gekennzeichnet, dass** das Gerät vor der Zuordnung die Identität des zentralen Controllers des ersten Netzwerks kennt und dass die über dieses erste Netzwerk ausgesendeten Rahmen ein Feld zur Identifizierung dieses zentralen Controllers umfassen.

9. Verfahren nach Anspruch 8, **dadurch gekennzeichnet, dass** die Bestimmung der Kollision **dadurch** erfolgt, dass detektiert wird, dass das Gerät zumindest gewisse Rahmen oder Rahmenteile, die über das erste Netzwerk ausgesendet werden, nicht decodieren kann.
